# EUROPEAN PATENT APPLICATION

(11) **EP 2 541 083 A2**
(43) Date of publication of application: **02.01.2013**
(21) Application number: 12466013.5
(22) Date of filing: 27.06.2012
(51) Int. Cl.: F16C 13/00, F16C 35/067

(54) **Bearing housing, mainly for rollers, and method of production**

(30) Priority: 28.06.2011 CZ 20110386
(71) Applicant: Wista s.r.o., 763 02 Zlín, Louky (CZ)
(72) Inventor: Neuwirth, Jiri, 760 01 Zlin (CZ)
(74) Representative: Janik, Zdenek

(57) **Abstract**

In case of cast production of the bearing housing, a ball bearing (5) is fitted on the core of the casting mould before its assembly, which is at least partly cast with the casting material after assembly. Prior to assembly of the casting mould, it is also possible to fit at least one sealing element (21) on its core. Before assembly of the casting mould, it is further possible to fit a sliding plate (3) on the side of the bearing (5).

The housing of bearing, which rotates coaxially around the rotation axis of the ball bearing (5), contains at least one hole (81) for insertion the pin or shaft and is made up of a housing (4), which forms a compact body with a cavity (7) for the ball bearing (5), whereby on the side with the hole (81) the material covers the housing (4) from the outer ring (51) of the ball bearing (5) to the centre of the hole (81), at least the side of the outer ring (51) of the bearing (5). Alternatively, the housing may only have one hole for the pin or shaft, whereas the opposite side is fully made up of the material of housing (4). In the hole (81) for the pin or shaft may be a sealing element (21), whose wall in assembled state closely fits the pin or shaft may have sealing teeth (23) and its wall at the point of contact with the material of the housing (4) may have protrusions (25) and/or notches (27). The housing may also contain a sliding plate (3), which is in the cavity (7) and is situated on the opposite side to the hole (81) for insertion the pin or shaft, which is in sliding contact with the side of the inner ring (52) of the bearing (5). Alternatively, the sealing element (21) and/or sliding plate (3) in assembled state can form a compact body with the material of the housing (4).

## Description

### Technical field

The invention concerns the bearing housing, mainly the housing of the roller bearings, and solves protection of the bearings from the impact of the surrounding environment, such as the abrasive effects of dust or corrosive influence of substances from the surrounding environment.

### Description of prior art

It is known that to reduce the friction of the rotary motion of the machine components, bearings are used whose friction or rolling surfaces must remain smooth for reliable operation. If equipment that contains bearings is operated in a dusty or aggressive environment, it is necessary to isolate the bearings from the surroundings.

In the transportation of loose materials, roller bearings are used on the conveyors, which consist of a housing that is deployed on the outer ring of the ball bearing. The inner ring of the bearing is set on a spindle or shaft. The bearing is usually held in desired position with spring locking pins or a screw.

The disadvantage of this arrangement is that the bearing has minimum protection from the influence of the surroundings.

In the cases where the rollers are installed on conveyors for transport of abrasive loose materials or conveyors for use in a chemically aggressive environment, it is best to isolate the roller bearing from the surroundings to protect the bearing from high abrasive loads or prevent increased friction as a result of the presence of abrasive dust in the surroundings or to prevent increased friction due to corrosion, the bearings are isolated from the roller bearings of the rollers are isolated from the surroundings by means of steel or rubber sealing housings or covers.

The disadvantage of protecting the bearing with a sealing housing or cover is that the lubricant is forced out of the bearing body during operation and it soils the exterior of the bearing housing. Dirt from the surroundings subsequently sticks to this grease, and in the case of conveyors this applies mainly to the transported material, which subsequently causes disruption of the housing or cover, thus in final consequence leading to entire destruction of the bearing.

### Disclosure of the invention

Up mentioned disadvantages are solved by bearing housing, mainly for the roller bearing, and method of production according to this invention, where the bearing housing is rotatively symmetric around the rotation axis of the bearing and contains at least one hole for passing through the pin or shaft and is made by casting in a mould with a core.

The essence of the method is that before assembly of the casting mould, a bearing is set on its core and after assembly of the casting mould the bearing is at least partially cast by the casting material. Alternatively, before assembly of the casting mould, at least from one side of the bearing, and coaxially with the bearing at least one sealing element is set on the core of casting mould. According to a further alternative, before assembly of the casting mould the sliding plate is set on the side of the bearing.

The essence of the bearing housing, mainly for the roller bearing, which is rotatively symmetric around the rotation axis of the bearing has at least one hole for passing insertion the pin or shaft, according to this invention is that it is made up of a housing, which is formed by a compact body with a cavity for the bearing. On the side with the hole, the material of the housing overlap the surface of the outer ring of the bearing towards the centre of the hole, over the side of the outer ring of the bearing. Alternatively, the housing contains only one hole for insertion the pin or shaft and full wall that is made of the material of the housing is on the side opposite to hole. Alternatively, there is the sealing element in the hole for insertion the pin or shaft. According to another alternatives the wall of the sealing element, which is in assembled state adjacent to the surface of the pin or shaft, has sealing teeth or the wall of the sealing element at the point of contact with the material of the housing has protrusions and/or notches.. Alternatively, the housing contains a slide plate, which is in the cavity, on the side, which is opposite the hole for insertion the pin or shaft. Sliding plate is, in assembled state, in sliding contact with the side surface of the inner ring of the bearing. According to another alternative the sealing element and/or sliding plate forms, in assembled state, a compact body with the material of the housing.

The advantage of this invention is that in an abrasive environment, the service life of the bearings is elongated substantially. The advantage of usage of sealing elements, whose material does not bond with the material of the housing is, that they can be replaced in case of wear.

### Description of the drawings

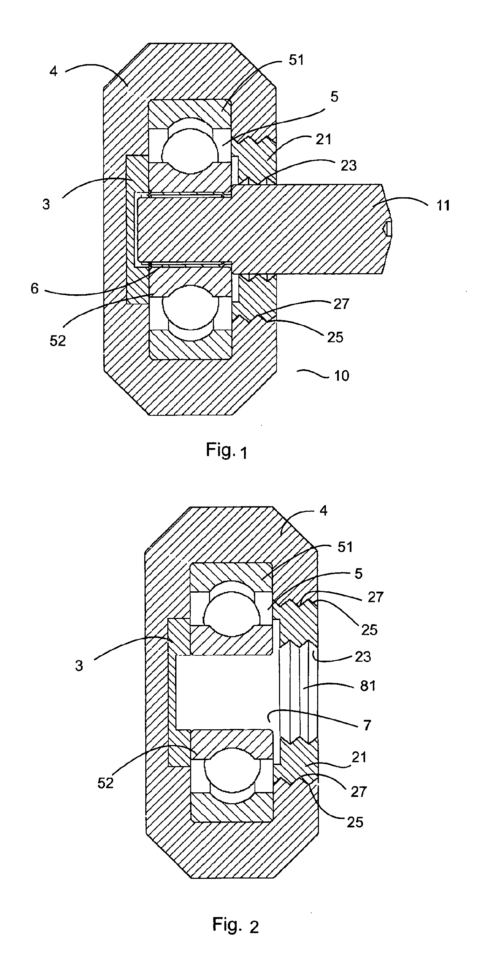

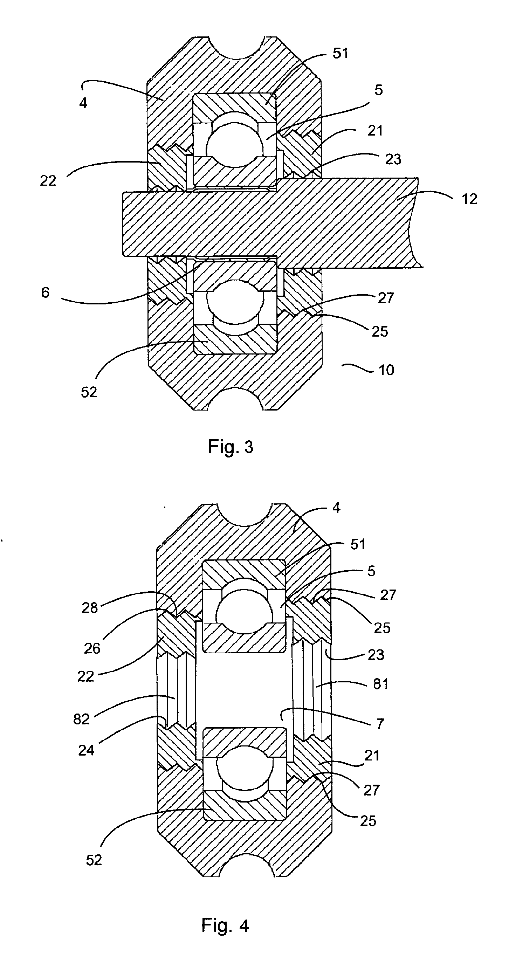

Figure 1 shows the section of the roller with wheel according to example 1 and figure 2 shows the section of the actual wheel of the roller according to example 1, before attachment to the pin. Figure 3 shows the section of the roller with wheel according to example 2 and figure 4 shows the section of the actual wheel of the roller according to example 2, before attachment to the shaft.

### Examples of embodiments

### Example 1

The bearing housing according to example 1 is used on rollers, which are integral parts of the sliding part of the rake conveyor. Each roller consists of wheel 10 and pin 11, to which the wheel 10 is attached. Wheel 10 contains a ball bearing 5, which in assembled state is isolated from surrounding environment. Housing 4 is rotatively symmetric around the rotation axis of ball bearing 5 and has one hole 81 for insertion of the pin 11, on which the bearing 5 in assembled state. The bearing housing consists of the housing 4, which is formed by a compact body with cavity 7 for the ball bearing 5. On the side with hole 81*,* the material of the housing 4 overlaps the surface of the outer ring 51 of ball bearing 5 toward the centre of hole 81 over the side of the outer ring 51 of ball bearing 5, such that the outer ring 51 is completely covered by the material that makes up the housing 4. On the side, which is opposite to hole 81, the material of the housing 4 makes a full wall, which covers the ball bearing 5 completely. In hole 81 for insertion the pin 11 is the sealing element 21 through which the pin 11 runs in assembled state. The wall of the sealing element 21, which in assembled state is adjacent to the surface of the pin 11 has sealing teeth 23. At the point of contact with the material of the housing 4, the wall of the sealing element 21 has radial protrusions 25 and notches 27. From the side, opposite the hole 81, there is the sliding plate 3 in the cavity 7. Sliding plate 3 adjacent to the side surface of the inner ring 52 of the ball bearing 5, whereas upon rotation of the roller, the inner ring 52 of the ball bearing 5 slide on the surface of the sliding plate 3. Sliding plate 3 in assembled state forms a compact body with the material of housing 4. In assembled state, a spacing ring 6 with perforations pro fixation of the ball bearing 5 to the pin 11 is between the inner ring 52 of the ball bearing 5 and the pin 11.

The wheel of the roller is made by fixation of individual parts, sliding plate 3, ball bearing 5 and sealing element 21, using the material of the housing 4, concretely its partial casting by casting material in the casting mould, and subsequent hardening of the material that forms the housing 4.

Before assembly of the casting mould, a sealing element 21, bearing 5 and the sliding plate 3 are set on its core, thus setting the casting mould. After assembling the casting mould, its interior is filled with polyurethane, thus creating a compact body, in whose cavity, surrounded to a greater extent by the housing material and partially by the material of the sealing element is the sliding plate 3 and the ball bearing 5. When assembling the roller, the ball bearing 5 is fitted on the free end of the pin 11, on which the spacing ring 6 is already installed. By fully pressing the ball bearing 5 unto the pin 11, the perforations of the spacing ring 6 are squeezed up thus fitting the ball bearing 5 flush with the pin 11.

### Example 2

The cover of ball bearing 5 according to example 2 is used in the guide pulley and consists of the wheel 10 and the shaft 12, at one end of which the wheel 10 is fitted. To compare with example 1, the housing 4 has also second hole 82 and the free end of the shaft 12 passes through the wheel 10. The housing 4 of ball bearing 5 according to example 2 is for this reason different from the housing of ball bearing 5, described in example 1 in that in place of a sliding plate 3, it contains a second sealing element 22, which from the side of the shaft 12 contains additional sealing teeth 24 and from the side of the housing material 4 additional protrusions 26 and additional notches 28. The solution described in example 2 differs from the solution described in example 1 also in that the material used to make the sealing elements 21,22 is the same as the material subsequently used to subsequently cast the housing 4, e.g. para rubber, such that when hardening the housing 4, the material that forms the housing 4 is bonded with the material of the sealing elements.

### Example 3

The bearing housing according to example 3 differs from the housing described in example 1 in that the housing 4 consists of two machined parts, which are bonded after insertion of the bearing 5. Bonding of the two parts of the housing 4 creates a compact bearing housing 5.

### Industrial applicability

The invention may be used for all rotary machines used in an aggressive environment or environment with a presence of abrasive particles. The perimeter of the housing can be used directly as a runner or a tyre or wheel disk may be fitted to the housing.

## Claims

1. The method of production of the bearing housing, mainly for the roller bearing, by casting in mould containing a core, **characterized in that** before assembly of the casting mould, a bearing (5) is set on its core and after assembly of the casting mould the bearing (5) is at least partially cast by the casting material.

2. The method of production of the bearing housing according to claim 1 **characterized in that** before assembly of the casting mould, at least from one side of the bearing (5), and coaxially with the bearing (5) at least one sealing element (21,22) is set on the core of casting mould.

3. The method of production of the bearing housing according to claim 1 **characterized in that** before assembly of the casting mould the sliding plate (3) is set on the side of the bearing (5).

4. The bearing housing, mainly for the roller bearing, which is rotatively symmetric around the rotation axis of the bearing (5) and has at least one hole (81,82) for insertion the pin (11) or shaft (12), **characterized in that** it is made up of a housing (4), which is formed by a compact body with a cavity (7) for insertion of the bearing (5), whereby on the side with the hole (81,82) the material of the housing (4) overlap the surface of the outer ring (51) of the bearing (5) towards the centre of the hole (81,82), over the side of the outer ring (51) of the bearing (5).

5. The bearing housing according to claim 4, **characterized in that** it contains only one hole (81) for insertion the pin (11) or shaft (12), whereby a full wall that is made of the material of the housing (4) is on the side opposite to hole (81)

6. The bearing housing according to claim 4, **characterized in that** the sealing element (21,22) is in the hole (81,82) for insertion the pin (11) or shaft (12).

7. The bearing housing according to claim 6, **characterized in that** the wall of the sealing element (21,22), which is in assembled state adjacent to the surface of the pin (11) or shaft (12), has sealing teeth (23,24).

8. The bearing housing according to claim 6, **characterized in that** the wall of the sealing element (21,22) at the point of contact with the material of the housing (4) has protrusions (25,26) and/or notches (27,28).

9. The bearing housing according to claim 5, **characterized in that** it also contains sliding plate (3), which is in the cavity (7) on the side which is opposite to hole (81) for insertion the pin (11) or shaft (12), whereby the sliding plate (3) is, in assembled state, in sliding contact with the side surface of the inner ring (52) of the bearing (5).

10. The bearing housing according to claim 6 or 9 **characterized in that** the sealing element (21,22) and/or sliding plate (3) forms, in assembled state, a compact body with the material of the housing (4).
